# EUROPÄISCHE PATENTSCHRIFT

(11) **EP 0 923 844 B1**
(45) Veröffentlichungstag und Bekanntmachung des Hinweises auf die Patenterteilung: **03.07.2002**
(21) Anmeldenummer: 97937392.5
(22) Anmeldetag: 04.09.1997
(51) Int. Cl.: H04Q 7/38, H04Q 7/24

(54) **ROAMING-VERFAHREN UND ZUGEHÖRIGE VORRICHTUNGEN**
ROAMING PROCESS AND PERTAINING DEVICES
PROCEDE D'ITINERANCE ET DISPOSITIFS POUR CE PROCEDE

(30) Priorität: 04.09.1996 US 24601 P; 02.09.1997 US 56072
(43) Veröffentlichungstag der Anmeldung: 23.06.1999
(73) Patentinhaber: Swisscom Mobile AG, 3050 Bern (CH)
(72) Erfinder: HEUTSCHI, Walter, CH-3303 Jegenstorf (CH); RITTER, Rudolf, CH-3052 Zollikofen (CH); MARTSCHITSCH, Andreas, CH-3360 Herzogenbuchsee (CH)
(74) Vertreter: BOVARD AG - Patentanwälte
(86) Internationale Anmeldenummer: CH9700324
(87) Internationale Veröffentlichungsnummer: WO9810614

(56) Entgegenhaltungen:
- EP-A- 0 344 989
- WO-A-95/27382
- WO-A-96/13954
- DE-A- 4 118 993
- GB-A- 2 280 085
- US-A- 5 497 412

## Beschreibung

### Technischer Bereich

Die vorliegende Erfindung betrifft das Roaming in einem Funknetz, insbesondere in einem Mobilfunknetz.

Obwohl die folgende Beschreibung insbesondere das Problem des Roamings zwischen Mobilnetzen vom GSM-Typ behandelt, betrifft die Erfindung auch das Roaming zwischen jeglichen Arten von Mobilfunknetzen, über Land oder via Satellit, sowie auch das Roaming zwischen unterschiedlichen Arten von Netzen.

### Stand der Technik

Die Mobiltelephonnetze vom GSM-Typ bestehen seit Beginn der neunziger Jahre. Gegenwärtig bestehen weltweit mehr als 200 Netze dieses Typs. Zusätzlich bestehen andere Mobilfunknetze, die mit verschiedenen anderen analogen oder numerischen Standards arbeiten. Diese verschiedenen Netze bedecken im allgemeinen verschiedene geographische Regionen, zum Beispiel verschiedene Länder. Es gibt jedoch einige Überlappungen zwischen Netzen und zum Beispiel bestehen in einigen Ländern mehrere Mobilnetze in derselben Region nebeneinander.

Die Mobilfunkteilnehmer haben im allgemeinen bei einem bestimmten Mobilnetz, das im allgemeinen an ihrem Wohnort betrieben wird, zum Beispiel mit einem nationalen Netz, ein Abonnement oder eine andere Art von Abkommen getroffen. Dieses besondere Netz für einen bestimmten Teilnehmer wird als Heimmobilfunknetz oder häufiger mit dem englischen Akronym HPLMN (Home Public Land Mobile Network) bezeichnet. Es ist dennoch wünschenswert, daß ein Teilnehmer auch Anrufe durchführen und empfangen kann, wenn er sein HPLMN verläßt, das heißt, wenn er sich in ein besuchtes Mobilfunknetz (VPLMN, Visited Public Land Mobile Network) begibt. Ebenso ist es notwendig, daß die Anrufe, die von einem Mobilfunkteilnehmer bei einem Besuch in einem VPLMN durchgeführt werden, dem Teilnehmer vom Betreiber des HPLMN verrechnet werden können und daß die anfallenden Beträge nach einem Übereinkommen zwischen dem HPLMN und dem VPLMN umverteilt werden können. Diese Möglichkeiten erfordern gegenwärtig den Abschluß bilateraler Abkommen zwischen den Betreibern der GSM-Netze. Diese Abkommen sind als Roaming-Abkommen bekannt.

Die Roaming-Verfahren sind zum Beispiel von I. Brini et al. in "International roaming in digital cellular networks", CSELT Technical reports, Band XX, Nr. 6, Italien, Dezember 1992, S. 531-536, oder von denselben Autoren in "European roaming related technical problems" CSELT Technical reports, Band XX, Nr. 3, Italien, Juni 1992, S. 209-215, beschrieben. Genauere Information zu dem Konzept der Heimdatei (HLR, Home Location Register) in einer GSM-Umgebung gibt Bent Gabelgaard in "The (GSM) HRL - Advantages and Challenges", 1994, Records of the Third Annual International Conference on Universal Personal Communications, San Diego, 27. September - 1. Oktober 1994, veröffentlicht von IEEE in New York, 1994, S. 335-339. Genauere Information über die Herstellung von Verbindungen in einem GSM-Netz findet sich vor allem in WO95/01074.

Ein älteres Mobilnetz in einem bevölkerten Land kann zahlreiche bilaterale Roaming-Abkommen, zum Beispiel mehr als 50, abgeschlossen haben. Für ein neueres Mobilnetz ist es schwierig oder unmöglich, rasch eine vergleichbare Anzahl von Roaming-Abkommen abzuschließen, insbesondere, wenn dieses Netz eine geographische Region bedeckt, die schwach besiedelt ist oder in der das Potential möglicher Mobiltelephonteilnehmer gering ist. Außerdem können sich die Kosten, die durch den Abschluß eines Roaming-Abkommens zwischen zwei Netzen, für die Testung der Roaming-Verbindungen und für die periodische Erstellung von ausgetauschten Rechnungsdateien (TAP files) entstehen, als hinderlich erweisen, wenn der Verkehr zwischen diesen beiden Netzen schwach ist. Der Anreiz für neue Netze ist daher begrenzt, da die Teilnehmer nicht die Möglichkeit haben, ihre Endgeräte in einer großen Zahl von Ländern zu verwenden. Die Beschränkung der Anzahl von Roaming-Abkommen stellt somit einen Wettbewerbsnachteil für die Betreiber neuer Mobilnetze dar.

Die Patentschrift WO96/13954 (Ericsson) beschreibt ein Verfahren, das den Teilnehmern eines Heimmobilfunknetz die Herstellung einer Telephonverbindung aus einem besuchten Mobilfunknetz ohne Roaming-Abkommen mit dem Heimmobilfunknetz ermöglicht. Das Verfahren umfaßt einen Schritt einer manuellen Eintragung in eine Besuchertabelle. Dieser Schritt der manuellen Eintragung ist für den reisenden Teilnehmer mühsam. Dieses Patent betrifft nur die mit dem Roaming verbundenen Signalisationsprobleme, aber in keiner Weise das Problem der Fakturierung und des Clearings.

Die Patentschrift WO95/27382 (Ericsson) beschreibt ein Verfahren, das den Teilnehmern eines Funknetzes vom PDC-Typ (Personal Digital Cellular) ermöglicht, ihre Endgeräte in einem Netz vom GSM-Typ zu verwenden ("Inter Standard Roaming"). Die beschriebene Anordnung umfaßt neben den beiden Netzen, PDC und GSM, eine Roaming-Anordnung, welche die notwendigen Formatsumwandlungen für die zwischen dem GSM-Netz und dem PDC-Netz ausgetauschten Signale durchführt. Die Roaming-Anordnung wird von der Teilnehmerdatei HLR1 des PDC-Netzes als örtliche Vermittlungszentrale angesehen und wird von der örtlichen Vermittlungszentrale der Region des GSM-Netzes, in der sich der reisende Teilnehmer befindet, als Teilnehmerdatei HLR angesehen. Die beschriebene Roaming-Anordnung enthält eine Roamingdatei (ILR) mit der Liste aller Teilnehmer im PDC-Netz, welche die Berechtigung haben, auch das GSM-Netz zu benutzen. Wenn das PDC-Netz umfangreich ist, kann die Größe der Roaming-Datei beachtlich und ihre Verwaltung kostspielig werden. Diese Lösung strebt daher die Möglichkeit eines Roaming-Abkommens zwischen zwei Funknetzen, die verschiedene Standards verwenden, an, ermöglicht aber nicht, daß der Betreiber eines neuen Netzes rasch und kostengünstiger die Anzahl von Roaming-Abkommen erweitert. Auch hier weist dieses Patent nicht auf das Problem der Fakturierung und des Clearings hin.

Die Patentschrift GB-A-2280085 beschreibt ein Telekommunikationsverfahren, mit welchem ein Teilnehmer eines AMPS/D-AMPS-Netzes (D) sich in einem GSM-Netz einloggen kann. Der Betreiber des AMPS/D-AMPS-Netzes braucht ein Kooperierungsabkommen mit mindestens einem GSM-Netz A. Der Teilnehmer braucht eine neue GSM-SIM-Karte und ein GSM-Mobilgerät, um im Netz A, oder in einem anderen Netz mit einem Roamingabkommen mit A, telefonieren zu können. Die Rechnungen werden ihm trotzdem vom Betreiber des AMPS/D-AMPS-Netzes D zugestellt.

Eine Aufgabe der Erfindung ist daher die Erweiterung der Roamingmöglichkeiten, die den Teilnehmern von einem Netzbetreiber geboten werden können, ohne eine große Anzahl von Roaming-Abkommen abschließen zu müssen.

### Darlegung der Erfindung

Gemäß der Erfindung werden die obengenannten Aufgaben durch die Merkmale gelöst, die in den unabhängigen Ansprüchen angeführt sind, wobei die bevorzugten Ausführungsbeispiel außerdem in den abhängigen Ansprüchen genannt werden.

Insbesondere werden diese Aufgaben gelöst, indem einem Netz, zum Beispiel einem neuen Netz oder einem, das wenige Roaming-Abkommen abgeschlossen hat, die Roamingmöglichkeit von einem anderen Partnernetz geboten wird, vorzugsweise von einem Netz, das eine große Anzahl von Roaming-Abkommen abgeschlossen hat.

Insbesondere werden diese Aufgaben durch ein Telekommunikationsverfahren gelöst, welches einem Teilnehmer eines Heimmobilfunknetzes (HPLMN, Home Public Land Mobile Network) ermöglicht, sich einem besuchten Mobilfunknetz (VPLMN, Visitor Public Land Mobile Network) ohne Roaming-Abkommen mit dem Heimmobilfunknetz anzuschliessen, wobei der Anschluss durch Mittel (IMSI-PPLMN 3, 5) erfolgt, die von einer Partnereinheit (PPLMN) zur Verfügung gestellt werden, die ein Roaming-Abkommen einerseits mit dem Heimmobilfunknetz und andererseits mit dem besuchten Mobilfunknetz hat.

Die Beschreibung führt mehrere Ausführungsbeispiele der Erfindung an, die alle dem Betreiber eines neuen Mobilfunknetzes, der wenige Roaming-Abkommen abgeschlossen hat, ermöglichen, seinen Teilnehmern die Roamingmöglichkeiten von einem anderen Netz zu bieten, das eine große Anzahl von Roaming-Abkommen abgeschlossen hat. Der Vorteil besteht darin, daß die Teilnehmer des neuen Mobilnetzes sofort von allen Roaming-Abkommen des anderen Mobilnetzes profitieren können. Folglich wird das Mobilnetz, das seine Roaming-Abkommen zur Verfügung stellt, als Partnernetz oder PPLMN (Partner Public Land Mobile Network) bezeichnet.

Gemäß einem ersten Ausführungsbeispiel der Erfindung werden die Aufgaben der Erfindung im wesentlichen mit einer programmierbaren Vorrichtung, zum Beispiel einer SIM- (Subscriber Identity Module) Karte, gelöst, die mit einem neuartigen Programm versehen ist, das in der Folge als UBICOM-Programm für SIM-Karte bezeichnet wird, sowie mit einer Drehscheibe, die von einer Software gesteuert wird, die in der Folge als Verwaltungsprogramm UBICOM Manager bezeichnet wird. Die Drehscheibe hat sowohl auf die Heimdatei (HLR) des Heimnetzes HPLMN als auch auf die Heimdatei HLR des Partnernetzes PPLMN Zugriff.

Gemäß diesem ersten Ausführungsbeispiel enthält die SIM-Karte auf herkömmliche Weise einen ersten Satz von Teilnehmerkenndaten (IMSI-HPLMN, International Mobile Subscriber Identity) in dem Heimmobilfunknetz HPLMN. Die Karte enthält außerdem einen zweiten Satz von Teilnehmerkenndaten (IMSI-PPLMN) in einem Partnermobilfunknetz (PPLMN), das von einem Betreiber verwaltet wird, der ein Roaming-Abkommen mit dem Heimmobilfunknetz hat. Mittel zur Änderung der Kenndaten (Identität) ermöglichen eine Ersetzung des verwendeten Datensatzes entsprechend dem Mobilfunknetz, in dem sich gegenwärtig das Endgerät befindet. Durch diesen Mechanismus kann der Teilnehmer von HPLMN bei dem Betreiber des besuchten VPLMN-Netzes als Teilnehmer von PPLMN erkannt werden und somit das VPLMN-Netz mit denselben Roamingmöglichkeiten benützen, die den Teilnehmern von PPLMN geboten werden.

Dieses Ausführungsbeispiel erfordert jedoch eine Aktualisierung oder einen Austausch der SIM-Karten aller Teilnehmer des HPLMN-Netzes, die von den Roamingmöglichkeiten, die von dem PPLMN-Partnernetz geboten werden, profitieren wollen.

Gemäß einem zweiten Ausführungsbeispiel der Erfindung setzen die Anschlußanforderungen, die von einem Teilnehmer des Heimmobilfunknetzes (HPLMN) aus einem besuchten Mobilfunknetz (VPLMN-NR) ohne Roaming-Abkommen mit dem Heimmobilfunknetz ausgesendet werden, das Aussenden von Signalen, zum Beispiel einer Authentifizierungsanfrage, zu einer Zwischendrehscheibe voraus, die von einem Betreiber eines Partnernetzes (PPLMN) verwaltet wird, der ein Roaming-Abkommen einerseits mit dem Heimnetz HPLMN und andererseits mit dem besuchten Netz VPLMN-NR hat. Die Drehscheibe ersetzt in diesen Signalen die Standortinformationen der Teilnehmer (LI-HPLMN) durch Daten, die einem Teilnehmer in dem Partnerfunknetz (LI-PPLMN) entsprechen.

Das zweite Ausführungsbeispiel der Erfindung umfaßt somit einen Schritt, in dem diese Standortdaten (LI) des Teilnehmers derart modifiziert werden, daß eine Verbindung hergestellt werden kann. In diesem zweiten Ausführungsbeispiel sind die Mittel zur Datenmodifikation jedoch in einer Drehscheibe integriert und nicht in Form eines Informationsmoduls in der SIM-Karte der Teilnehmer implementiert.

Diese beiden Ausführungsbeispiele sind dennoch für die Betreiber des Funknetzes nicht vollständig transparent, da diese die Identität bzw. den genauen Standort des Teilnehmers nicht kennen. Einige Betreiber schlagen ihren Teilnehmern günstige Abonnementsmöglichkeiten vor, welche die Anrufe aus oder in bestimmte Weltregionen ausschließen. Derartige Einschränkungen könnten in bestimmten Fällen durch den Einsatz des einen oder anderen dieser Ausführungsbeispiele umgangen werden.

Gemäß einem dritten Ausführungsbeispiel der Erfindung erfolgt die Herstellung der Verbindungen von dem besuchten Mobilfunknetz (VPLMN) über mindestens eine Zwischendrehscheibe, mit der sowohl das Heimmobilfunknetz wie auch das besuchte Mobilfunknetz ein Roamingabkommen unterzeichnet haben. Die von dem besuchten Mobilfunknetz (VPLMN) hergestellten Verbindungen gehen dennoch nicht unbedingt über die Drehscheibe.

In diesem Fall hat die Drehscheibe die Aufgabe einer zentralen Roamingdrehscheibe zwischen allen Funknetzen. Die Drehscheibe wird vorzugsweise von einer Partnereinheit verwaltet, zum Beispiel von dem Betreiber eines Funknetzes (PPLMN), der bereits Roaming-Abkommen mit einer großen Anzahl von Netzen abgeschlossen hat. Diese Abkommen müssen unter Umständen ersetzt oder durch Nebenabkommen ergänzt werden, welche die Durchführung des Verfahrens der Erfindung ermöglichen.

### Kurzgefaßte Beschreibung der Zeichnungen

Die Erfindung wird durch die Beschreibung näher erklärt, die als Beispiel angeführt und durch die Figuren veranschaulicht wird, von welchen:
Figur 1 schematisch ein Funksystem zeigt, das ein Heimmobilfunknetz (HPLMN), ein besuchtes Mobilfunknetz (VPLMN) und ein Partnerfunknetz (PPLMN) zeigt, sowie Mittel gemäß dem ersten Ausführungsbeispiel der Erfindung, die einem Teilnehmer von HPLMN ermöglichen, sein Endgerät im VPLMN zu benützen;
Figur 2 ein Fließdiagramm ist, welches das Programm zeigt, das von der SIM-Karte gemäß dem ersten Ausführungsbeispiel der Erfindung ausgeführt wird;
Figur 3 ein Fließdiagramm ist, welches eine andere Ausführungsform des Programms zeigt, das von der SIM-Karte gemäß dem ersten Ausführungsbeispiel der Erfindung ausgeführt wird, wenn der SIM-Toolkit GSM11.14 verfügbar ist;
Figur 4 schematisch ein Funksystem zeigt, das ein Heimmobilfunknetz (HPLMN), ein besuchtes Mobilfunknetz (VPLMN) und ein Partnerfunknetz (PPLMN) umfaßt, sowie Mittel gemäß dem zweiten Ausführungsbeispiel der Erfindung, die einem Teilnehmer von HPLMN ermöglichen, sein Endgerät im VPLMN zu benützen;
Figur 5 schematisch ein Funksystem zeigt, das ein Heimmobilfunknetz (HPLMN), ein besuchtes Mobilfunknetz (VPLMN) und eine Drehscheibe umfaßt, die von einer Partnereinheit verwaltet wird, sowie Mittel gemäß dem dritten Ausführungsbeispiel der Erfindung, die einem Teilnehmer von HPLMN ermöglichen, sein Endgerät im VPLMN zu benützen;
Figur 6 ein Fließdiagramm ist, das bestimmte Schritte des Clearing- und Fakturierungsverfahrens zeigt, die von der Clearing- und Fakturierungseinheit der Drehscheibe gemäß dem dritten Ausführungsbeispiel der Erfindung ausgeführt werden;
Figur 7 schematisch den Ablauf der Fakturierung und Zahlung in einem Funksystem gemäß dem dritten Ausführungsbeispiel der Erfindung zeigt, das ein Heimmobilfunknetz (HPLMN), ein besuchtes Mobilfunknetz (VPLMN) und eine Drehscheibe, die von einer Partnereinheit verwaltet wird, umfaßt.

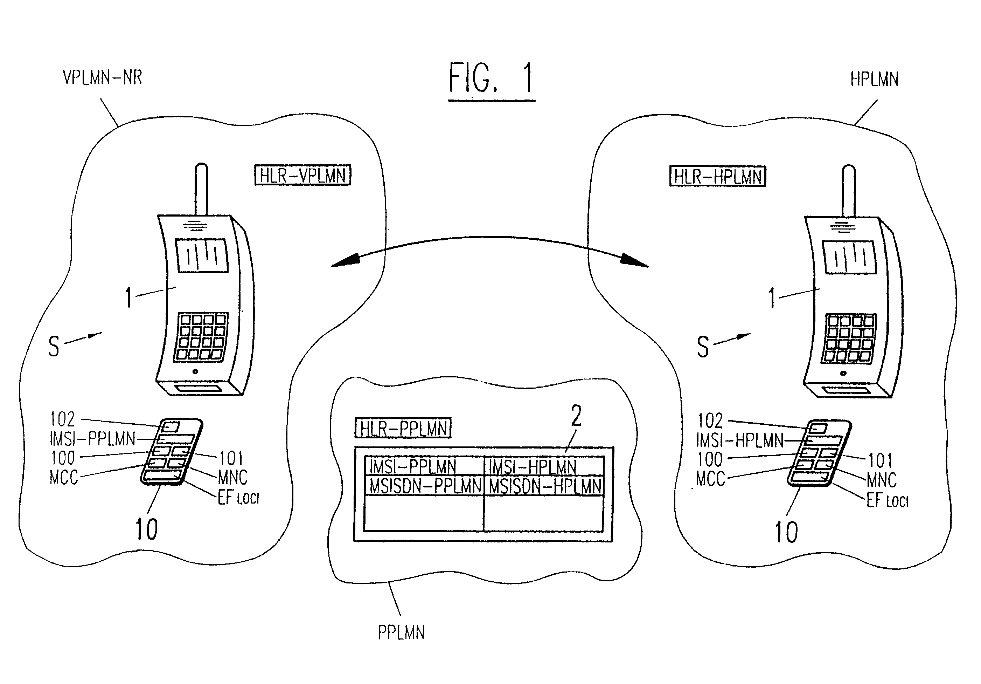

Es wird nun mit Bezugnahme auf die Figuren 1 bis 3 ein Ausführungsbeispiel der ersten Variante der Erfindung besprochen. Das als Beispiel dargestellte Funksystem der Erfindung umfaßt ein Heimmobilfunknetz (HPLMN, Home Public Land Mobile Network), zum Beispiel ein Funknetz nach dem GSM-Standard, ein Partnerfunknetz (PPLMN, Partner Public Land Mobile Network), sowie ein besuchtes Funknetz (VPLMN, Visited Public Land Mobile Network). Die drei Netze HPLMN, PPLMN und VPLMN umfassen jeweils zumindest eine Heimdatei HLR (Home Location Register), die als HLR-HPLMN, HLR-PPLMN bzw. HLR-VPLMN bezeichnet wird. Die anderen Elemente, welche die Mobilnetze bilden, wie Endgeräte (Mobiltelephone), Zellen, Basisstationen, Basisstationssteuereinheiten, Vermittlungsstellen usw., sind nach dem Stand der Technik bekannt und somit nicht dargestellt. Das besuchte Netz VPLMN hat kein Roaming-Abkommen mit dem Heimnetz HPLMN, was mit dem Akronym VPLMN-NR (VPLMN with No Roaming Agreement) angezeigt wird.

Es versteht sich, daß das hier dargestellte Funksystem nur als nicht einschränkendes Beispiel gedacht ist und daß die Erfindung auch bei komplexeren Funksystemen anwendbar ist, die eine große Anzahl von Mobilfunknetzen umfassen, die nach einem oder mehreren Standards funktionieren und von welchen nur einige durch bilaterale Roaming-Abkommen verbunden sind.

Der Buchstabe S bezeichnet einen Teilnehmer vom Heimmobilfunknetz HPLMN. Wenn er sich in der geographischen Region befindet, die von seinem Heimnetz HPLMN betreut wird, kann der Teilnehmer S mit seinem Endgerät 1, zum Beispiel einem tragbaren Telephon, telephonieren und die Dienste, die von seinem HPLMN angeboten werden, auf ganz normale Weise nutzen. Das Endgerät 1 enthält eine programmierbare Vorrichtung 10, zum Beispiel eine Chipkarte, die in den GSM-Netzen als SIM-Karte (Subscriber Identification Module) bezeichnet wird. Die SIM-Karten sind zum Beispiel von Theodora Grogorova et al. in "SIM Cards", Telecommunication Journal of Australia, Bd. 43, Nr. 2, 1993, beschrieben und ermöglichen vor allem das Speichern einer Teilnehmerkennung, die mit dem Akronym IMSI (International Mobile Subscriber Identity) bezeichnet wird. Die SIM-Karte enthält außerdem einen Prozessor 102, der verschiedene Algorithmen ausführen kann.

Wenn der Teilnehmer sein Heimnetz HPLMN verläßt und in ein besuchtes Netz kommt, das mit seinem HPLMN ein Roaming-Abkommen hat (nicht dargestellt), kann der Teilnehmer S sein Endgerät 1 ganz normal mit Hilfe der herkömmlichen Roaming-Verfahren benutzen, die zum Beispiel in den obengenannten Schriften beschrieben sind. Wenn sich aber der Teilnehmer S in ein besuchtes Netz VPLMN-NR begibt, das kein Roaming-Abkommen mit seinem Heimnetz abgeschlossen hat, kann der Teilnehmer die IMSI-Kennung seiner Karte nicht mehr für einen Anschluß verwenden, da das besuchte Netz diese Kennung nicht akzeptiert. Nach dem Stand der Technik kann der Teilnehmer somit aus der geographischen Zone, die von einem VPLMN-NR bedeckt ist, weder Anrufe ausführen noch empfangen.

Gemäß dem ersten Ausführungsbeispiel der Erfindung enthält die SIM-Karte 10 ein Computerprogramm, das mit UBICOM-Programm bezeichnet ist. Das UBICOM-Programm ermöglicht den Austausch der Kennung des Teilnehmers vom HPLMN-Netz (IMSI-HPLMN) durch eine entsprechende Kennung eines Teilnehmers in dem Partnernetz PPLMN (IMSI-PPLMN). Der Teilnehmer S gilt somit im besuchten Netz VPLMN-NR als reisender Teilnehmer, der vom Partnernetz PPLMN kommt. Da das PPLMN-Netz ein Roaming-Abkommen mit dem besuchten Netz VPLMN-NR hat, kann sich somit der Teilnehmer S anschließen und Anrufe im VPLMN-NR ausführen oder empfangen.

Das Partnernetz PPLMN enthält auf herkömmliche Weise eine Standortdatei HLR-PPLMN, in der nach einer für ein GSM-Netz herkömmlichen Prozedur die Information registriert wird, dass der Teilnehmer S (der durch die IMSI-PPLMN identifiziert wird) sich jetzt im VPLMN-NR befindet. Gemäß der Erfindung umfaßt das PPLMN-Netz außerdem eine Drehscheibe mit der Bezeichnung UBICOM (2), die von einer Software gesteuert wird, die in der Folge als Verwaltungsprogramm UBICOM bezeichnet wird. Die Drehscheibe 2 wird durch einen Alarm informiert, wenn der Teilnehmer S in der HLR-PPLMN Dateien registriert wird. Die Ausgabe solcher Alarmsignale ist nach dem Stand der Technik bekannt und wird zum Beispiel bereits verwendet, wenn eine Kurzmeldung SMS vorübergehend gespeichert wird und wenn sich ein reisender Teilnehmer wieder in seinem Netz anschließt. In einem derartigen Fall wird die Verwaltungszentrale für Kurzmeldungen SMSC durch einen Alarm informiert, daß die Kurzmeldung nun ausgesendet werden kann. Diese Funktion kann auch dazu verwendet werden, um das Dateiverwaltungsprogramm UBICOM 2 zu informieren; es ist jedoch auch möglich, eine andere Funktion zu verwenden.

Die Drehscheibe UBICOM 2 erkennt die Entsprechung zwischen der IMSI-PPLMN und der IMSI-HPLMN jedes Teilnehmers. Ebenso erkennt die Drehscheibe UBICOM 2 die Entsprechung zwischen der Kennungsnummer MSISDN des Endgeräts 1 im PPLMN (PPLMN-MSISDN, Mobile Station ISDN Number) und im HPLMN (HPLMN-MSISDN). Wenn die Drehscheibe 2 entdeckt, daß der Teilnehmer S die Kennung PPLMN-IMSI des PPLMN benützt, sendet sie eine Nachricht an die Standortdatei HLR-HPLMN des Heimnetzes von S (HPLMN), die eine Rufumleitung (CFU, Call Forwarding Inconditional) aktiviert oder deaktiviert. Diese Nachricht bewirkt die Umleitung aller Anrufe, die für die MSISDN-HPLMN bestimmt sind, zu der MSISDN-PPLMN. Die Kennung des Endgeräts MSISDN-HPLMN kann somit zum Anrufen des Teilnehmers S verwendet werden. Das Verfahren ist automatisch und für den Teilnehmer transparent.

Wenn der Teilnehmer S das besuchte Netz VPLMN-NR verläßt und wieder in sein Heimnetz HPLMN zurückkehrt, schließt er sich zunächst mit Hilfe der Kennung PPLMN-IMSI an. Dieser Wiederanschluß im HPLMN-Netz wird in der Standortdatei von PPLMN durch den zuvor beschriebenen Mechanismus registriert. Die Drehscheibe UBICOM 2 gibt nun einen Alarm an das Heimnetz HPLMN zur Unterdrückung der Umleitung CFU aus.

Die SIM-Karte 10 des Teilnehmers S wird ebenso beim Wiederanschluß im HPLMN informiert, daß der Teilnehmer S wieder in sein Heimnetz zurückgekehrt ist. Das UBICOM-Programm der SIM-Karte tauscht wieder die Kennung des Teilnehmers IMSI im Partnernetz PPLMN (IMSI-PPLMN) durch eine Teilnehmerkennung im Heimnetz HPLMN (IMSI-HPLMN) aus. Der Teilnehmer S kann somit nach dem Wiederanschluß in seinem Heimnetz sein Endgerät 1 ausschalten und wieder einschalten, um wieder mit seiner eigenen IMSI und seiner MSISDN zu telephonieren, die in seinem Heimnetz definiert sind. Der Mechanismus der Erfindung wird nur reaktiviert, wenn sich der Teilnehmer S wieder in ein Netz ohne Roaming-Abkommen VPLMN-NR begibt.

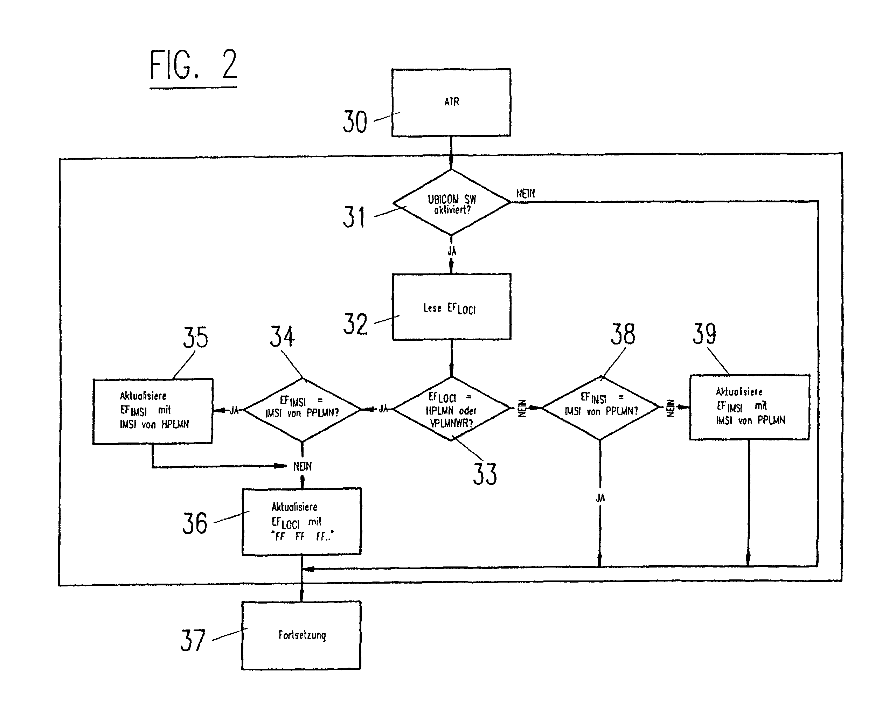

Es werden nun mit Bezugnahme auf Figur 2 die Schritte des UBICOM-Programms beschrieben, die von der SIM-Karte der Erfindung ausgeführt werden.

Das UBICOM-Programm der SIM-Karte wird automatisch bei jeder Rücksetzung der Karte ausgeführt, zum Beispiel nach dem Einschalten des Endgeräts 1. Die SIM-Karte der Erfindung enthält außer den üblichen Dateien des Standard-GSM eine zusätzliche Datei EFUBICOM, welche die folgenden Informationen enthält:
- Ein Abarbeitungsflag 100, das anzeigt, ob der UBICOM-Mechanismus aktiviert ist oder nicht.
- Die Teilnehmerkennung im Heimnetz IMSI-HPLMN.
- Die Teilnehmerkennung im Partnernetz IMSI-PPLMN.
- Die Heim-Landeskennzahl (MCC, Mobile Country Code) und die Heim-Netzwerkkennzahl (MNC, Mobile Network Code).
- Eine Liste 101 der MCC-Kennzahlen aller Länder und der MNC-Kennzahlen aller VPLMN-Netze, die mit dem Heimnetz ein Roaming-Abkommen abgeschlossen haben (VPLMN-WR, VPLMN With Roaming Agreement).

Diese Liste kann zum Beispiel mit einer Prozedur, die unter der Bezeichnung SICAP bekannt und in der Patentanmeldung EP94810363.5 im Namen der Antragstellerin beschrieben ist, oder mit jeder anderen geeigneten Prozedur wie ESMS usw. dynamisch vervollständigt oder aktualisiert werden.

Dem Fachmann ist bekannt, daß diese verschiedenen Informationen als veranschaulichendes Beispiel angeführt sind und daß sie ebenso in mehrere Dateien aufgeteilt sein können.

Das UBICOM-Programm, das von dem Prozessor der SIM-Karte ausgeführt wird, beginnt mit Schritt 30, ATR (Answer to Reset). In Schritt 31 wird das Abarbeitungsflag, das zeigt, ob der UBICOM-Mechanismus aktiviert ist, getestet. Das UBICOM-Programm wird sofort unterbrochen, wenn das Abarbeitungsflag anzeigt, daß der UBICOM-Mechanismus nicht aktiviert ist, und der Prozessor der SIM-Karte fährt in diesem Fall sofort mit der Ausführung der normalen Operationen ab Schritt 37 fort, die nach einer herkömmlichen Rücksetzung durchgeführt werden.

Wenn der UBICOM-Mechanismus aktiviert ist, liest das Programm in Schritt 32 die herkömmliche Datei EFLOCI (Elementary File for Location Information). In Schritt 33 prüft das Programm, ob die Datei EFLOCI die Kennzahl des Mobilnetzes (MNC, Mobile Network Code) des Heimnetzes HPLMN enthält, oder die Kennzahl eines Netzes VPLMN-WR, die in der Datei EFUBICOM angeführt ist, das heißt, eines Netzes, das mit dem HPLMN-Netz ein Roaming-Abkommen abgeschlossen hat.

Bei einem positiven Ergebnis der Prüfung 33, das heißt, wenn die Datei EFLOCI anzeigt, daß sich der Teilnehmer S gegenwärtig in einem Netz befindet, das die Kennung IMSI seines Heimnetzes HPLMN erkennt, fährt das UBICOM-Programm mit der Prüfung 34 fort, in der die Teilnehmerkennung IMSI geprüft wird (Datei EFIMSI). Wenn die Teilnehmerkennung IMSI einer Kennung im Partnernetz PPLMN entspricht, fährt das Programm mit dem folgenden Schritt 35 fort, in dem die Teilnehmerkennung IMSI-PPLMN durch die Kennung IMSI-HPLMN im Heimnetz des Teilnehmers ersetzt wird. Das Programm führt anschließend die Operation 36 aus, in der die Datei EFLOCl gelöscht wird, zum Beispiel durch Einschreiben des Hexadezimalwertes "FF FF FF...".

Das UBICOM-Programm wird anschließend beendet, und der Prozessor der SIM-Karte fährt anschließend mit Schritt 37 fort, in dem die normalen Funktionen der SIM-Karte ausgeführt werden. Wenn sich der Teilnehmer S tatsächlich in seinem HPLMN oder in einem VPLMN-WR befindet, kann er sich somit normal unter Verwendung seiner IMSI-HPLMN an das Netz anschließen. Die Datei EFLOCI wird nun mit der Kennung des Mobilnetzes aktualisiert, an das sich der Teilnehmer anschließt.

Wenn sich der Teilnehmer S jedoch in einem Netz VPLMN-NR ohne Roaming-Abkommen befindet, kann er sich mit seiner IMSI-HPLMN nicht anschließen, da kein Roaming-Abkommen zwischen dem HPLMN- und dem VPLMN-NR-Netz besteht. Der Teilnehmer S kann daher weder telephonieren, noch einen Anruf entgegennehmen, so daß die Datei EFLOCI nicht aktualisiert wird und gelöscht bleibt. Der Teilnehmer schaltet dann sein Endgerät ab und wieder ein, was eine neuerliche Ausführung des UBICOM-Programms bewirkt. Der Fachmann kann sich ohne Schwierigkeiten andere, elegantere Weise für einen Neubeginn der Ausführung des UBICOM-Programms vorstellen.

Bei dieser neuerlichen Ausführung des UBICOM-Programms ist somit die Datei EFLOCI gelöscht. Das Ergebnis der Prüfung 33 ist somit negativ, wodurch der SIM-Karte angezeigt wird, daß die Teilnehmerkennung im Heimnetz IMSI-HPLMN nicht verwendet werden kann, da sich der Teilnehmer S gegenwärtig in einem Netz ohne Roaming-Abkommen mit seinem Heimnetz HPLMN befindet. Das UBICOM-Programm fährt in diesem Fall mit der Prüfung 38 fort, in der die Teilnehmerkennung IMSI geprüft wird (Datei EFIMSI). Wenn die Teilnehmerkennung IMSI einer Kennung in dem Heimnetz HPLMN entspricht, fährt das Programm mit dem folgenden Schritt 39 fort, in dem die Teilnehmerkennung IMSI-HPLMN durch die Kennung IMSI-PPLMN in dem Partnernetz PPLMN ersetzt wird, so daß sich der Teilnehmer S anschließen kann.

Es gibt daher vier mögliche Situationen beim Einschalten des Endgeräts:
1) Der Teilnehmer S befindet sich in seinem Heimnetz HPLMN oder in einem besuchten Netz mit einem Roaming-Abkommen VPLMN-WR
   Die Datei EFLOCI wird zuallererst gelesen. Das UBICOM-Programm stellt in Schritt 33 fest, daß die enthaltenen Informationen der Kennung von HPLMN oder eines VPLMN-WR entsprechen. Die Teilnehmerkennung IMSI-HPLMN kann weiterhin verwendet und die Datei EFLOCI zum Beispiel mit den Daten "FF FF FF " gelöscht werden.
   Das UBICOM-Programm wird nun beendet, und der Prozessor der SIM-Karte kann die normalen Funktionen der SIM-Karte ausführen.
2) Der Teilnehmer S kommt in sein Heimnetz HPLMN oder in ein besuchtes Netz mit einem Roaming-Abkommen VPLMN-WR aus einem besuchten Netz ohne Roaming-Abkommen VPLMN-NR.
   Die Datei EFLOCI wird zuallererst gelesen. Das UBICOM-Programm stellt in Schritt 33 fest, daß die enthaltenen Informationen der Kennung von HPLMN oder eines VPLMN-WR entsprechen. Die Teilnehmerkennung IMSI-PPLMN wird in der Folge durch die Kennung im Heimnetz IMSI-HPLMN ersetzt und dann die Datei EFLOCI zum Beispiel mit den Daten "FF FF FF " gelöscht.
   Das UBICOM-Programm wird nun beendet, und der Prozessor der SIM-Karte kann die normalen Funktionen der SIM-Karte ausführen.
3) Der Teilnehmer S kommt in ein besuchtes Netz ohne Roaming-Abkommen VPLMN-NR aus seinem Heimnetz HPLMN öder aus einem besuchten Netz mit einem Roaming-Abkommen VPLMN-WR
   Die SIM-Karte kann keinen Anschluß an das VPLMN-NR-Netz herstellen, da die IMSI-HPLMN in diesem Netz nicht berechtigt ist. Die Datei EFLOCI wird dennoch zum Beispiel mit den Daten "FF FF FF " gelöscht.
   Das Mobiltelephon wird dann abgeschaltet und wieder eingeschaltet und das UBICOM-Programm ein weiteres Mal ausgeführt. EFLOCI ist bei dieser zweiten Ausführung dennoch leer. Der Prozessor ersetzt nun in Schritt 39 die Teilnehmerkennung IMSI-HPLMN durch die Kennung im Partnemetz IMSI-PPLMN.
   Das UBICOM-Programm wird nun beendet, und der Prozessor der SIM-Karte kann die normalen Funktionen der SIM-Karte ausführen.
4) Der Teilnehmer S befindet sich in einem besuchten Netz ohne Roaming-Abkommen
   Die Datei EFLOCI wird zuallererst gelesen. Das UBICOM-Programm stellt in Schritt 33 fest, daß die enthaltenen Informationen der Kennzahl eines VPLMN-NR entsprechen. Die Teilnehmerkennung IMSI-PPLMN kann weiterhin verwendet werden.
   Das UBICOM-Programm wird nun beendet, und der Prozessor der SIM-Karte kann die normalen Funktionen der SIM-Karte ausführen.

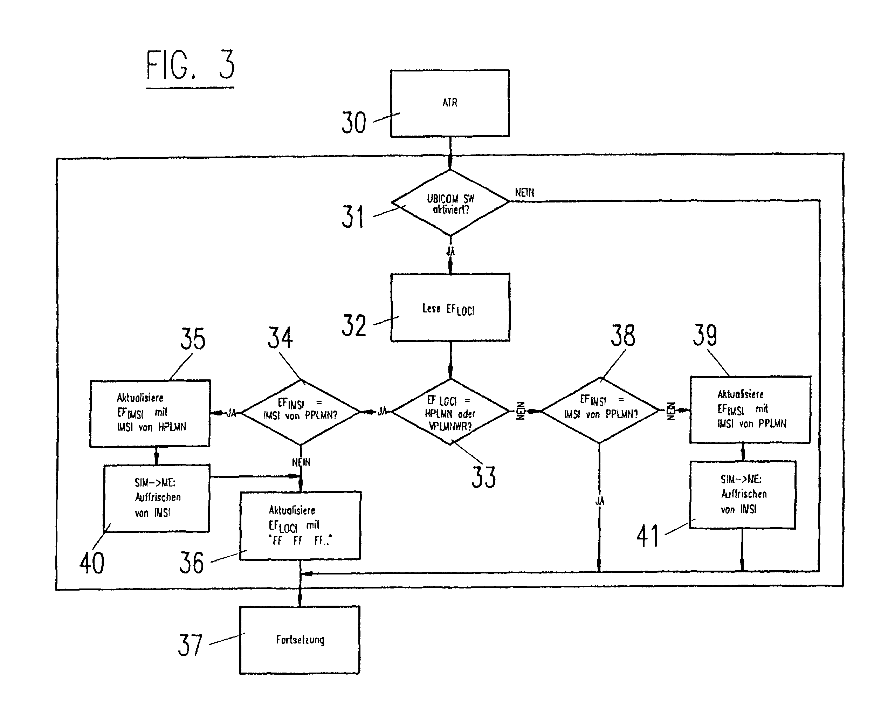

Figur 3 zeigt eine Variante des von dem Prozessor der SIM-Karte ausgeführten Programms gemäß einem ersten Ausführungsbeispiel der Erfindung. In Bezug auf die in Figur 2 dargestellte Variante ermöglicht diese Variante, daß das Endgerät 1 nicht ausgeschaltet und dann wieder eingeschaltet werden muß, um das UBICOM-Programm neuerlich auszuführen. Zu diesem Zwecke umfaßt in dieser Variante das Programm zwei zusätzliche Schritte 40 und 41, in welchen die SIM-Karte eine Anfrage direkt an das Endgerät (ME, Mobile Equipment) sendet, die ein direktes Erhalten der Teilnehmerkennung IMSI ermöglicht.

Diese zusätzliche Möglichkeit wird vor allem durch die zusätzlichen Funktionen der SIM-Karten gemäß dem GSM11.14-Toolkit bereitgestellt.

Dem Fachmann ist bekannt, daß die SIM-Karte gemäß der Erfindung vorzugsweise mit einem herkömmlichen Kodierschlüssel Ki versehen ist. Dieser Schlüssel wird sowohl zum Kodieren der IMSI-HPLMN als auch der IMSI-PPLMN verwendet. Eine Voraussetzung für ein einwandfreies Funktionieren des Verfahrens der Erfindung ist somit eine Entsprechung zwischen dem Kennungsalgorithmus, der von dem PPLMN-Netz und von HPLMN verwendet wird.

Bei der zuvor beschriebenen Variante muß zu deren Durchführung das UBICOM-Programm in alle SIM-Karten von Teilnehmern im Mobilnetz HPLMN geladen werden. Dieses Laden kann zum Beispiel mit dem SICAP-Verfahren durchgeführt werden, die in der bereits erwähnten Patentanmeldung EP94810363.5 beschrieben ist. Wenn der Betreiber des HPLMN-Netzes das SICAP-Verfahren noch nicht benützt hat oder wenn die Speicher- oder Verarbeitungskapazität der verteilten SIM-Karten zur verläßlichen Ausführung des UBICOM-Programms nicht ausreichend ist, kann es notwendig sein, die SIM-Karten der Teilnehmer auszutauschen, welche die neuartigen Roamingmöglichkeiten nutzen wollen, die auf dem Umweg über ein Partnernetz PPLMN geboten werden. Angesichts der geringen Kosten dieser Karten und der voraussichtlichen Zunahme des Verkehrs, ist ein derartiger Austausch durchaus vorstellbar.

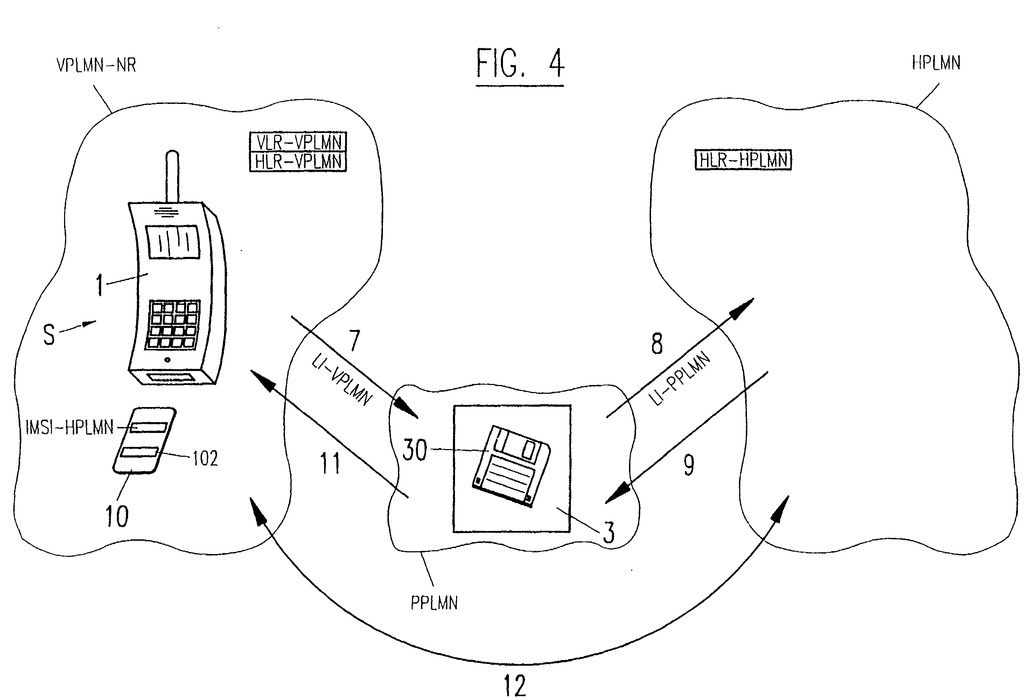

Es wird nun mit Bezugnahme auf Figur 4 ein zweites Ausführungsbeispiel der Erfindung beschrieben, das ohne Aktualisierung und ohne Austausch der SIM-Karten von Teilnehmern ausgeführt werden kann.

Dieses Ausführungsbeispiel verwendet eine internationale Drehscheibe 3, die sich zum Beispiel in dem Land oder in der Region befindet, das von dem Partnernetz PPLMN betreut wird, oder in einer anderen geeigneten Gegend. Im Idealfall sollte die Drehscheibe 3 geographisch an einer Zwischenposition zwischen dem HPLMN-Netz und dem VPLMN-NR-Netz angeordnet sind. Entsprechend der Anzahl von teilnehmenden Netzen kann es vorteilhaft sein, mehrere Drehscheiben zu verwenden, zum Beispiel eine pro Kontinent.

Die Drehscheibe 3 wird vorzugsweise vom Betreiber eines Partnernetzes PPLMN oder von einer anderen zugehörigen Einheit des Betreibers oder einer Einheit, die mit dem Betreiber in Verbindung steht, verwaltet. Die PLMN-Netze, die ihr Roaming-Angebot durch die Drehscheibe 3 erweitern wollen, müssen ein besonderes Roaming-Abkommen mit dem Betreiber dieser Drehscheibe abschließen. Wie gezeigt wird, sind nur einige geringfügige Anpassungen seitens der PLMN-Netze erforderlich, um die Drehscheibe 3 zu nutzen. Diese besonderen Abkommen können somit ohne Schwierigkeiten mit den Mobilnetzen VPLMN geschlossen werden, die bereits ein Roaming-Abkommen mit dem PPLMN-Netz abgeschlossen haben. Bilaterale Abkommen zwischen allen PPLMN-Netzen, welche die Drehscheibe 3 nutzen wollen, sind dagegen nicht notwendig.

Die Ausführung dieses zweiten Ausführungsbeispiels der Erfindung erfordert, daß die teilnehmenden VPLMN-Netze die Anschlußanträge der anderen VPLMN-Netze akzeptieren, selbst wenn sie untereinander kein Roaming-Abkommen haben.

Die Drehscheibe 3 besteht vorzugsweise aus einer programmierbaren Vorrichtung, die gleichzeitig an das HPLMN-Netz und jedes Mobilnetz PLMN, das diesem erwähnten, besonderen Abkommen beigetreten ist, angeschlossen werden kann. Die Drehscheibe 3 wird vorzugsweise von einem Computerprogramm gesteuert, das auf einem Aufzeichnungsträger 30 wie zum Beispiel einer Diskette, Festplatte oder einem optischen Plattenspeicher aufgezeichnet ist, der von der Drehscheibe 3 gelesen werden kann.

Der einfacheren Darstellung wegen ist in Figur 4 ein einziges VPLMN-Netz zusätzlich zu dem Heimnetz HPLMN des Teilnehmers S eingezeichnet; es versteht sich jedoch, daß ein Funksystem gemäß diesem zweiten Ausführungsbeispiel vor allem dann einen Vorteil bietet, wenn die Anzahl der beigetretenen Netze groß ist. Außerdem sind ebenso wie in Figur 1 nur die zur Erklärung der Erfindung wesentlichen Strukturen des HPLMN- und VPLMN-Netzes dargestellt.

Es wird angenommen, daß ein Teilnehmer S, der ein Teilnehmer des Heimnetzes HPLMN ist, sich in das Netz VPLMN-NR ohne Roaming-Abkommen mit dem HPLMN-Netz begibt. Das Heimnetz HPLMN und das besuchte Netz VPLMN-NR haben dennoch beide ein besonderes Roaming-Abkommen mit dem Partnernetz PPLMN abgeschlossen. Wenn der Teilnehmer S versucht, sich mit seinem Endgerät an das VPLMN-NR-Netz anzuschließen, bestimmt dieses aufgrund der Teilnehmerkennung HPLMN-IMSI, daß der Teilnehmer S aus dem HPLMN-Netz kommt, mit dem kein bilaterales Roaming-Abkommen geschlossen wurde. Das VPLMN-NR-Netz müßte im Prinzip die Anschlußanforderung ablehnen.

Wegen der besonderen Roaming-Abkommen mit dem Partnernetz PPLMN werden die Teilnehmer des HPLMN-Netzes jedoch in dem VPLMN-NR als Teilnehmer des PPLMN-Netzes angesehen. Die besonderen Roaming-Abkommen verlangen somit seitens der beigetretenen Netze, daß diese die Heimdatei HLR und/oder die Vermittlungszentralen MSC ändern, um die SIM-Karten der Teilnehmer der anderen beigetretenen Netze zu identifizieren, insbesondere des Heimnetzes HPLMN des Teilnehmers S, und daß sie diese Teilnehmer wie Teilnehmer des Partnernetzes PPLMN behandeln. In Übereinstimmung mit den GSM-Protokollen sendet das VPLMN-NR-Netz folglich eine Authentifizierungsanfrage 7 an das PPLMN-Netz. Diese Anfrage wird in dem PPLMN-Netz von der Drehscheibe 3 behandelt, die besonders für diesen Zweck im Rahmen dieser Erfindung errichtet wurde.

Die Authentifizierungsanfrage, die vom VPLMN-NR-Netz ausgesendet wird, enthält insbesondere die Informationen über den Standort des Teilnehmers S (LI, Location Information), so daß die Drehscheibe 3 nun weiß, daß der Teilnehmer S sich im VPLMN-NR-Netz befindet. Die Drehscheibe 3 modifiziert diese Standortinformation LI, indem sie diese durch LI-PPLMN-Daten ersetzt, die anzeigen, daß sich der Teilnehmer im PPLMN-Netz befindet, und überträgt dann die derart modifizierte Berechtigungsanfrage an das Heimnetz HPLMN von S (Pfeil 8). Die Drehscheibe 2 "belügt" somit das HPLMN-Netz, indem sie vorgibt, daß sich S in dem Partnernetz PPLMN befindet.

Das Heimnetz HPLMN hat, wie bereits beschrieben, ein Roaming-Abkommen mit dem PPLMN-Netz abgeschlossen. Die Heimdatei HLR des Heimnetzes HPLMN prüft zuerst, ob der Teilnehmer S berechtigt ist, sein Endgerät in dem Partnernetz PPLMN zu benützen, und wenn das Ergebnis dieser Prüfung positiv ist, wird eine entsprechende Antwort 9 an die Drehscheibe 3 gesendet, welche diese weiter an das besuchte Netz VPLMN-NR (Pfeil 11) überträgt. Diese Antwort wird in diesem Netz mit einer Antwort verglichen, die von der SIM-Karte 10 des Endgeräts 1 des Teilnehmers S erhalten wurde, und wenn das Ergebnis dieser Prüfung positiv ist, wird der Teilnehmer S als berechtigt angesehen und in der Besucherdatei VLR-VPLMN (Visitor Location Register von VPLMN) eingetragen. Das vollständige Anschlußverfahren kann mehrere zusätzlich ausgetauschte Abfragen und Antworten zwischen dem besuchten Netz VPLMN-NR und dem Heimnetz HPLMN umfassen, die jedesmal durch die Drehscheibe 3 laufen. Zum Beispiel kann das besuchte Netz beim Heimnetz nach Spezialdiensten fragen, für deren Benutzung der Teilnehmer S eine Berechtigung hat.

Am Ende dieses Anschlußverfahrens des Teilnehmers S an das besuchte Netz VPLMN-NR behandelt dieses S als ob es sich um einen Teilnehmer von PPLMN handelte und überträgt die von S durchgeführten Verbindungsanforderungen, die es nicht direkt herstellen kann, an die Drehscheibe 3, die von PPLMN verwaltet wird. Umgekehrt überträgt das HPLMN-Netz die für S bestimmten Anrufe an die Drehscheibe 3.

Die Verbindungsanforderungen und die Anrufe von oder für S, die durch den Pfeil 12 dargestellt sind, laufen somit über das PPLMN-Netz und über die Drehscheibe 3. Für den besonderen Fall, daß die Mobilnetze HPLMN und VPLMN-NR verschiedene Standards aufweisen, zum Beispiel wenn ein Teilnehmer von einem GSM-Netz in ein PDC-Netz kommt, kann die Drehscheibe 3 nach dem Stand der Technik bekannte Umwandlungsmittel umfassen, die eine Umwandlung der Formate der Verbindungsanforderungen und Anrufe ermöglichen.

Im VPLMN-NR-Netz wird der Teilnehmer S als Teilnehmer des Partnemetzes PPLMN angesehen. Ferner kennt das Heimnetz HPLMN nicht den exakten Standort von S, wenn er sich in dem VPLMN-NR-Netz befindet und nimmt an, daß er sich in dem Partnernetz PPLMN befindet. Diese Variante ist daher für das Heimfunknetz HPLMN des reisenden Teilnehmers S nicht vollständig transparent, da dieses nicht den exakten Standort des Teilnehmers kennt. Einige Betreiber bieten ihren Teilnehmern günstige Abonnementsmöglichkeiten an, die Anrufe aus oder in bestimmte Weltregionen ausschließen. Diese Einschränkungen können in gewissen Fällen durch die Ausführung dieses zweiten Ausführungsbeispiels umgangen werden.

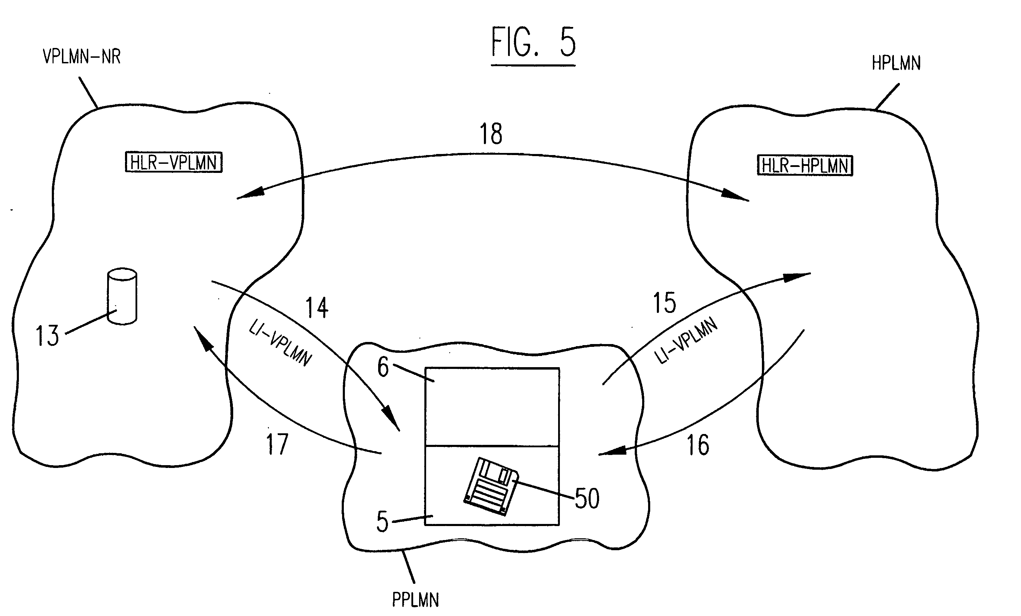

Es wird nun mit Bezugnahme auf Figur 5 ein drittes Ausführungsbeispiel der Erfindung beschrieben, welches diese Nachteile nicht aufweist.

Das dritte Ausführungsbeispiel der Erfindung verlangt, daß alle teilnehmenden PLMN-Netze ein besonderes Roaming-Abkommen mit dem Betreiber einer Drehscheibe 5, zum Beispiel mit einem Partnemetz PPLMN oder mit einer Gesellschaft, die eine solche'Drehscheibe verwaltet, abschließen. Wie in der Folge offensichtlich wird, kann jedes beigetretene Netz durch den Abschluß eines derartigen besonderen Abkommens seinen Teilnehmern die Roamingmöglichkeiten in jedem anderen beigetretenen Netz bieten; daher sind keine bilateralen Roaming-Abkommen zwischen allen beigetretenen Netzen notwendig. Wenn die Anzahl der beigetretenen Netze groß ist, kann ein neues Netz, das nur wenige Roaming-Abkommen hat, somit mit einem einzigen Roaming-Abkommen, das mit der Drehscheibe 5 geschlossen wird, seinen Teilnehmers die gleichen Möglichkeiten bieten wie jene, die von beigetretenen und bereits etablierten Netzen geboten werden. Bei einem Beitritt von neuen Mobilnetzen ist es nur notwendig, die Drehscheibe 5 neu zu konfigurieren und die Verbindungen zwischen dem neuen Mobilnetz und der Drehscheibe zu prüfen; es ist keine Anpassung seitens der bereits beigetretenen Netze erforderlich.

Die Mobilnetze brauchen ein besonderes Roaming-Abkommen, um die Drehscheibe nützen zu können. Dieses Abkommen regelt die für gewöhnlich in einem Roaming-Abkommen angeführten Punkte, die zum Beispiel im GSM Memorandum of Understanding empfohlen werden, sowie die folgenden, für das System der Erfindung spezifischen Punkte:
- Nennung der anderen beigetretenen Netze, mit welchen das neue Netz die Roamingmöglichkeiten über die Drehscheibe 5 nutzen möchte.
- Lenkung der notwendigen Signalisierungssignale zur Verbindung über die Drehscheibe 5.
- Anfangstests zur Prüfung der Qualität der Verbindungen zwischen dem neuen beigetretenen Netz und der Drehscheibe 5. Ein Test der bilateralen Verbindungen mit jedem anderen beigetretenen Netz ist nicht notwendig.
- Periodische Lieferung der Fakturierungsdateien (TAP files) an die Drehscheibe 5.
- Höhe der Gesprächsgebühren, die von dem neuen beigetretenen Netz erhoben werden.
- usw.

Die Drehscheibe 5 kann wie die Drehscheibe 3 im zweiten Ausführungsbeispiel in dem Land oder der Region angeordnet sein, die von dem Partnernetz PPLMN betreut wird, oder in einer anderen geeigneten Gegend. Mehrere Drehscheiben, die geographisch verteilt sind, können sich als geeignet erweisen. Die Drehscheibe wird vorzugsweise vom Betreiber des Partnernetzes PPLMN oder von einer anderen zugehörigen Einheit des Betreibers oder einer Einheit, die mit dem Betreiber in Verbindung steht, verwaltet.

Die internationale Drehscheibe 5 besteht vorzugsweise aus einer programmierbaren Vorrichtung, die gleichzeitig mit dem HPLMN-Netz und jedem PLMN-Netz verbunden werden kann, das diesem besonderen genannten Abkommen beigetreten ist. Sie wird vorzugsweise von einem Computerprogramm gesteuert, das auf einem Aufzeichnungsträger 50 wie zum Beispiel einer Diskette, Festplatte oder einem optischen Plattenspeicher aufgezeichnet ist, der von der Drehscheibe 5 gelesen werden kann.

Es wird angenommen, daß ein Teilnehmer S, der ein Teilnehmer des Heimnetzes HPLMN ist, sich in das Netz VPLMN-NR ohne bilaterales Roaming-Abkommen mit dem HPLMN-Netz begibt. Das Heimnetz HPLMN und das besuchte Netz VPLMN-NR haben dennoch beide ein besonderes Roaming-Abkommen mit der Drehscheibe 5 abgeschlossen und sind auf diese Weise beigetreten. Wenn der Teilnehmer S versucht, sich mit seinem Endgerät an das VPLMN-NR-Netz anzuschließen, bestimmt dieses aufgrund der Teilnehmerkennung HPLMN-IMSI, daß der Teilnehmer S aus einem Netz (HPLMN) kommt, mit dem kein bilaterales Roaming-Abkommen geschlossen wurde. Das VPLMN-NR-Netz müßte im Prinzip die Anschlußanforderung ablehnen.

Das VPLMN-NR besitzt jedoch Speichermittel 13, welche die Liste der Netzwerkkennungen (NC) der mit der Zwischendrehscheibe 5 beigetretenen Netze enthalten. Das VPLMN-NR-Netz bestimmt somit, daß der Teilnehmer S von einem mit der Zwischendrehscheibe 5 beigetretenen Netz kommt. In diesem Fall sendet das VPLMN-NR-Netz aufgrund der erwähnten besonderen Roaming-Abkommen eine Authentifzierungsanfrage 14 an diese Drehscheibe 5. Die Drehscheibe 5 überträgt diese Anfrage sofort zur Heimdatei HLR des Heimnetzes HPLMN (Pfeil 15), ohne die möglicherweise enthaltene Standortinformation LI-VPLMN zu verändern.

Die Heimdatei HLR-HPLMN prüft zuerst, ob der Teilnehmer S berechtigt ist, sein Endgerät in den beigetretenen Netzen zu benützen, und wenn das Ergebnis dieser Prüfung positiv ist, wird eine entsprechende Antwort 16 an die Zwischendrehscheibe 5 gesendet, welche diese an das besuchte Netz VPLMN-NR (Pfeil 17) überträgt. Diese Antwort wird in diesem Netz mit einer von der SIM-Karte 10 des Endgeräts 1 des Teilnehmers S erhaltenen Antwort verglichen, und wenn das Ergebnis dieser Prüfung positiv ist, wird der Teilnehmer S als berechtigt angesehen und in der Besucherdatei VLR-VPLMN (Visitor Location Register von VPLMN) eingetragen. Wie bei dem zuvor beschriebenen zweiten Ausführungsbeispiel und wie in den herkömmlichen Roaming-Protokollen kann das vollständige Anschlußverfahren mehrere zusätzlich ausgetauschte Abfragen und Antworten zwischen dem besuchten Netz VPLMN-NR und dem Heimnetz HPLMN umfassen, die jedesmal durch die Zwischendrehscheibe 5 laufen. Zum Beispiel kann selbstverständlich auch die Teilnehmerkennung IMSI-HPLMN zwischen dem besuchten Netz und dem Heimnetz über die Drehscheibe 5 übertragen werden. Außerdem kann das besuchte Netz beim Heimnetz nach Spezialdiensten fragen, für deren Benutzung der Teilnehmer S eine Berechtigung hat.

Gemäß diesem dritten Ausführungsbeispiel speichert die Heimdatei des Heimnetzes HLP-HPLMN den korrekten Standort des Teilnehmers S in dem besuchten Netz VPLMN-NR; diese Information wird nicht von der Zwischendrehscheibe 5 verändert. Umgekehrt speichert die Besucherdatei VLR des besuchten Netzes VPLMN die Kennung des Heimnetzes HPLMN des Teilnehmer S korrekt und betrachtet somit S nicht als einen Teilnehmer des Partnernetzes PPLMN. Die Verbindungsanforderungen 18, die für den Teilnehmer S bestimmt sind und zum Beispiel aus seinem Heimnetz HPLMN kommen, können folglich direkt zwischen dem Heimnetz HPLMN und dem besuchten Netz VPLMN-NR geleitet werden, ohne über die Drehscheibe 5 zu laufen. Umgekehrt können die von S gemachten Anrufe, die für einen Teilnehmer außerhalb des besuchten Netzes VPLMN-NR bestimmt sind, direkt über die Standortdatei HLR-HPLMN des Heimnetzes von S geleitet werden, ohne über die Drehscheibe 5 zu laufen.

Je nach Art des Netzes können verschiedene Signale zwischen dem besuchten Netz und dem Heimnetz bei dem Anschluß des Teilnehmers S im besuchten Netz ausgetauscht werden. Gemäß dem dritten Ausführungsbeispiel der Erfindung wird zumindest ein Teil dieser Signale zwischen dem besuchten Netz und dem Heimnetz über die Zwischendrehscheibe 5 übertragen, die von einem Netzpartner PPLMN verwaltet wird.

Die Verbindungsanforderungen von oder für S laufen somit über die Drehscheibe 5. In dem besonderen Fall, wenn die Mobilnetze HPLMN und VPLMN-NR verschiedene Standards aufweisen, zum Beispiel wenn ein Teilnehmer von einem GSM-Netz in ein PDC-Netz kommt, kann die Drehscheibe 5 nach dem Stand der Technik bekannte Umwandlungsmittel umfassen, die eine Umwandlung der Formate der Verbindungsanforderungen ermöglichen.

Die Drehscheibe 5 umfaßt eine Clearing- und Fakturierungseinheit 6. Gemäß dem besonderen, zuvor beschriebenen Roaming-Abkommen muß sich jedes beigetretene Mobilnetz PLMN verpflichten, der Drehscheibe 5 Dateien zu liefern, welche Angaben in bezug auf alle Anrufe mit Roamingbenutzung enthalten, die von Teilnehmern ausgegangen sind oder für Teilnehmer bestimmt waren, die in diesem Netz zu Besuch waren. Ähnliche Dateien werden bereits in den herkömmlichen Roaming-Prozeduren verwendet und als "TAP files" bezeichnet. Gemäß der Erfindung müssen diese Dateien jedoch nicht an jedes andere beigetretene PLMN-Netz verteilt werden; die Betreiber können die Dateien, die Angaben über die Anrufe enthalten, welche die Teilnehmer jedes anderen beigetretenen Netzes umfassen, gruppieren, um sie an die Drehscheibe 5 zu senden. Es ist möglich, entweder eine TAP-Datei für jedes beigetretene HPLMN-Netz oder eine einzige verknüpfte Datei zu senden, die alle Angaben in Bezug auf die Anrufe mit allen anderen Netzen enthält. Wenn kein Teilnehmer eines HPLMN-Netzes sein Endgerät in einem VPLMN-Netz seit der letzten Sendung der TAP-Datei benutzt hat, setzt vorzugsweise der Betreiber des VPLMN-Netzes die Clearing- und Fakturierungseinheit durch eine bestimmte Benachrichtigung davon in Kenntnis.

Die TAP-Dateien und die Benachrichtigungen können der Drehscheibe 5 in elektronischer Form, zum Beispiel unter Verwendung des bekannten Austauschformats EDI (Electronic Data Interchange), gesendet werden. Andere Träger, zum Beispiel Magnetbänder, können natürlich im Rahmen dieser Erfindung verwendet werden. Die TAP-Dateien werden der Drehscheibe in einem im voraus festgelegten Rhythmus, vorzugsweise täglich, übermittelt.

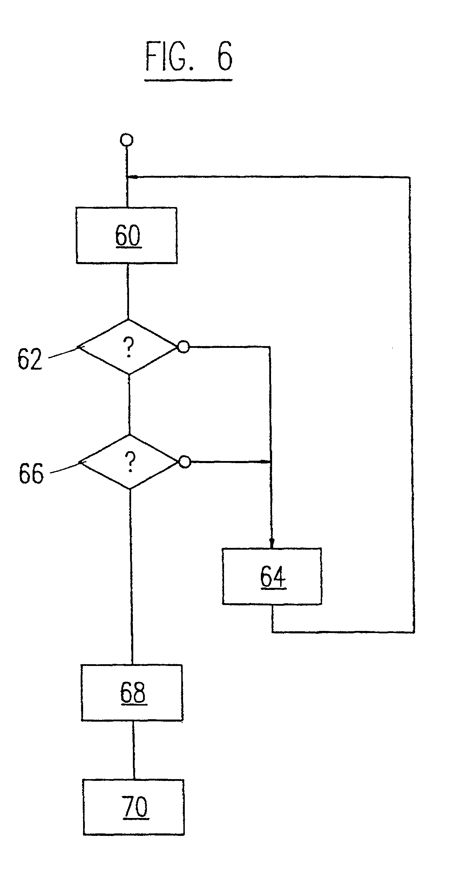

Die Clearing-Einheit 6 in der Drehscheibe 5 empfängt und behandelt die erhaltenen TAP-Dateien verschiedener beigetretener Mobilnetze (VPLMN) und verteilt die erhaltenen Informationen an jedes Heimnetz HPLMN. Die Clearing-Einheit wird vorzugsweise von einem Computerprogramm gesteuert, das auf einem Aufzeichnungsträger 50 wie zum Beispiel einer Diskette, Festplatte oder einem optischen Plattenspeicher registriert ist. Die Clearing-Einheit kann aus demselben Server beschaffen sein wie die Drehscheibe 5 oder auf einer anderen Maschine ausgeführt sein, die von demselben Betreiber wie die Drehscheibe 5 verwaltet wird. Unter der Steuerung dieses Programms führt die Clearing-Einheit vorzugsweise ein Verfahren aus, dessen Hauptschritte in dem Fließdiagramm von Figur 6 dargestellt sind.

In Schritt 60 empfängt die Clearing- und Fakturierungseinheit 6 die TAP-Dateien und/oder die Benachrichtigungen jedes beigetretenen Netzes, die zum Beispiel den ganzen Tag lang nach dem Datei-Austauschprotokoll EDI übertragen wurden. In Schritt 62 prüft die Clearing-Einheit 6 nun für jedes beigetretene PLMN-Netz, ob alle TAP-Dateien und alle Benachrichtigungen in dem festgelegten Zeitraum, zum Beispiel innerhalb von 24 Stunden nach der letzten Sendung von TAP-Dateien, erhalten wurden. Bei einem negativen Ergebnis dieser Prüfung wird eine manuelle oder automatische Überprüfung in Schritt 64 bei den PLMN-Netzen durchgeführt, welche die erforderlichen Dateien noch nicht geliefert haben, und das Programm kehrt zu Schritt 60 zurück.

In Schritt 66 werden die TAP-Dateien geprüft und im Falle eines Fehlers geht das Programm zu Schritt 64, um mit dem betroffenen Netz das Problem zu klären. Wenn die TAP-Dateien keine Fehler enthalten kopiert die Clearing-Einheit in Schritt 68 die erhaltenen Dateien in ein passendes Format und verteilt dann in Schritt 70 die Informationen, welche die Anrufe von oder für die Teilnehmer aus dem besuchten Netz in ein anderes beigetretenes Netz betreffen, an jedes Heimnetz HPLMN.

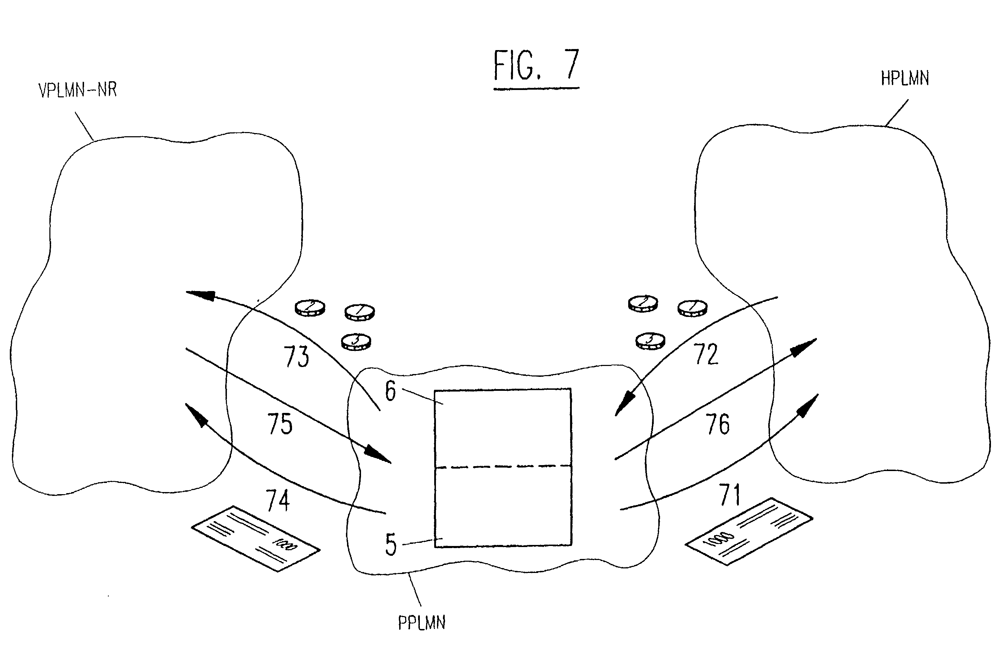

Es werden nun mit Bezugnahme auf Figur 7 die Abläufe gezeigt, die durch die Fakturierung der Anrufe mit Rufbereichswechsel gemäß dem Verfahren der Erfindung entstehen. Diese Abläufe werden von der Clearing - und Fakturierungseinheit 6 in der Drehscheibe 5 verwaltet.

In regelmäßigen festgelegten Intervallen, zum Beispiel monatlich, verrechnet die Clearing- und Fakturierungseinheit 6 in der Drehscheibe 5 jedem beigetretenen HPLMN-Netz einen Betrag, der den Anrufen der Teilnehmer von HPLMN in den anderen beigetretenen, besuchten VPLMN-Netzen entspricht. Dieser Betrag wird aus der in den Kopien der TAP-Dateien enthaltenen Information berechnet, die von jedem besuchten VPLMN-Netz geliefert wurden (Pfeil 75). Der Pfeil 76 kennzeichnet die Verteilung der Informationen aus den TAP-Dateien an die HPLMN. Die Rechnung wird an das betreffende HPLMN-Netz durch irgendein Mittel geschickt, zum Beispiel in elektronischer Form (Pfeil 71). Eine Kopie der Rechnung wird vorzugsweise zur Information jedem betreffenden VPLMN-Netz geschickt (Pfeil 74).

Nach Erhalt dieser Rechnung bezahlt jedes HPLMN den Betreiber der Drehscheibe 5 (Pfeil 72). Es ist erkennbar, dass die Zahlungsvorgänge, die von jedem HPLMN ausgeführt werden, deutlich vereinfacht sind, da die Beträge, die für jedes VPLMN bestimmt sind, in eine einzige Zahlung an einen einzigen Empfänger, den Betreiber der Drehscheibe 5, umgruppiert werden können. Nach Empfang des Geldes, das vom HPLMN eingezahlt wurde, verteilt die Clearing- und Fakturierungseinheit dieses Geld an jedes VPLMN (Pfeil 73), wobei ein Betrag über ihre Kosten derselben Rechnung hinzugefügt oder gesondert ausgewiesen wird. In dem - häufigen - Fall, daß die Netze HPLMN und VPLMN nicht dieselbe Währung verwenden, führt die Clearing-Einheit 6 die notwendigen Umrechnungen durch, vorzugsweise unter Verwendung einer Zwischenumrechnung mit dem SDR-Format.

## Patentansprüche

1. Telekommunikationsverfahren, das einem Teilnehmer eines Heimmobilfunknetzes ermöglicht, sich an ein besuchtes Mobilfunknetz (VPLMN, Visitor Public Land Mobile Network) ohne Roaming-Abkommen mit dem Heimmobilfunknetz anzuschließen, **dadurch gekennzeichnet, daß** ein Computerprogramm die Kenndaten des Teilnehmers durch von einem Partnerfunknetz zur Verfügung gestellten Kenndaten ersetzt, wobei das Partnerfunknetz ein Roaming-Abkommen einerseits mit dem Heimmobilfunknetz und andererseits mit dem besuchten Mobilfunknetz hat.

2. Verfahren gemäss Anspruch 1, **dadurch gekennzeichnet, daß** die Rechnungen über eine Einheit (6) laufen, die von dem Partnerfunknetz verwaltet wird.

3. Verfahren nach einem der vorangehenden Ansprüche, **dadurch gekennzeichnet, daß** zumindest eines der Mobilfunknetze ein GSM-Netz ist.

4. Verfahren nach einem der vorangehenden Ansprüche, **dadurch gekennzeichnet, daß** die Funknetze verschiedenartig sind.

5. Verfahren nach dem vorangehenden Anspruch, **dadurch gekennzeichnet, daß** die Kenndaten des Teilnehmers in einem Speichermittel (10) registriert werden, zum Beispiel in einer SIM-Karte, die in dem Mobilgerät (1) des Teilnehmers integriert ist, und daß die Kenndaten des Teilnehmers abhängig von dem Mobilfunknetz, in welchem sich gegenwärtig das Mobilgerät befindet, unter Verwendung eines Identitätsmodifizierungsmittels (102) in dem Endgerät durch Kenndaten ersetzt werden, die einem Teilnehmer in einem Partnerfunknetz entsprechen, das ein Roaming-Abkommen einerseits mit dem Heimmobilfunknetz und andererseits mit dem besuchten Mobilfunknetz hat.

6. Verfahren nach dem vorangehenden Anspruch, **dadurch gekennzeichnet, daß** die Kenndaten des Teilnehmers unter Verwendung eines Prozessors (102) in den Speichermitteln ersetzt werden, der ein Computerprogramm ausführt, das in den Speichermitteln registriert ist.

7. Verfahren nach dem vorangehenden Anspruch, **gekennzeichnet durch** einen Prüfungsschritt eines Abarbeitungsflags (101), das in den Speichermitteln enthalten ist, bei jeder Rücksetzung oder bei jedem Einschalten des Mobilgeräts (1), und **dadurch**, daß das benannte Computerprogramm am Ende der Prüfung ausgeführt wird, wenn das Abarbeitungsflag gesetzt ist.

8. Chipkarte (10), die zur Verwendung in einem Mobilfunkgerät (1) bestimmt ist und das Speichern von Teilnehmerkenndaten ermöglicht, **dadurch gekennzeichnet, daß** sie einen Prozessor (102) enthält, der eine Ersetzung der Teilnehmerkenndaten ermöglicht, in Abhängigkeit von dem besuchten Mobilfunknetz, in dem sich gegenwärtig das Mobilfunkgerät befindet, durch Kenndaten, die einem Teilnehmer in einem Partnerfunknetz entsprechen, das einerseits mit dem Heimmobilfunknetz, bei welchem der Teilnehmer abonniert ist, und andererseits mit dem besuchten Mobilfunknetz ein Roaming-Abkommen hat.

9. Chipkarte nach dem vorangehenden Anspruch, **dadurch gekennzeichnet, daß** die Mittel zur Änderung der Teilnehmerkenndaten ein Informationsmodul enthalten, das in der programmierbaren Vorrichtung (10) gespeichert ist und von einem Prozessor (102) auf der programmierbaren Vorrichtung ausgeführt werden kann.

10. Chipkarte nach dem vorangehenden Anspruch, **dadurch gekennzeichnet, daß** sie ferner ein Abarbeitungsflag (100) speichert, das bei jeder Rücksetzung oder bei jedem Einschalten des Mobilfunkgeräts (1) geprüft wird.

11. Chipkarte (10) nach Anspruch 8, **dadurch gekennzeichnet, dass** sie einen ersten Satz von Teilnehmerkenndaten aus dem Heimmobilfunknetz enthält, und daß sie ferner einen zweiten Satz von Teilnehmerkenndaten aus einem Partnerfunknetz enthält, das von einem Betreiber verwaltet wird, der ein Roaming-Abkommen mit dem Heimmobilfunknetz hat.

## Claims

1. Telecommunication process which enables a subscriber of a home mobile radio network to log on to a visited mobile radio network (VPLMN, Visitor Public Land Mobile Network) without a roaming agreement with the home mobile radio network, **characterised in that** a computer program replaces the identification data of the subscriber with identification data made available by a partner radio network, the partner radio network having a roaming agreement with the home mobile radio network, on the one hand, and with the visited mobile radio network, on the other hand.

2. Process according to claim 1, **characterised in that** the bills run over a unit (6) which is administered by the partner radio network.

3. Process according to one of the preceding claims, **characterised in that** at least one of the mobile radio networks is a GSM network.

4. Process according to one of the preceding claims, **characterised in that** the radio networks are of different types.

5. Process according to the preceding claim, **characterised in that** the identification data of the subscriber are registered in a storage means (10), for example in a SIM card, which is integrated in the mobile apparatus (1) of the subscriber, and that using an identification modifying means (102) the identification data of the subscriber, dependent upon the mobile radio network in which the mobile apparatus is presently situated, are replaced in the terminal by identification data corresponding to a subscriber in a partner radio network having a roaming agreement with the home mobile radio network, on the one hand, and with the visited mobile radio network, on the other hand.

6. Process according to the preceding claim, **characterised in that** the identification data of the subscriber are replaced in the storage means using a processor (102) which runs a computer program stored in the storage means.

7. Process according to the preceding claim, **characterised by** a step of checking a processing flag (101) contained in the storage means, upon each reset or upon each switching-on of the mobile apparatus (1), and in that the said computer program is run at the end of the check when the processing flag is set.

8. Chip card (10) which is intended for use in a mobile radio apparatus (1) and makes possible the storage of subscriber identification data, **characterised in that** it comprises a processor (102) which makes possible a replacement of the subscriber identification data, dependent on the visited mobile radio network in which the mobile radio apparatus is presently situated, by identification data corresponding to a subscriber in a partner radio network having a roaming agreement with the home mobile radio network in which the subscriber has subscribed, on the one hand, and with the visited mobile radio network, on the other hand.

9. Chip card according to the preceding claim, **characterised in that** the means for changing the subscriber identification data contain an information module which is stored in the programmable device (10) and can be executed by a processor (102) on the programmable device.

10. Chip card according to the preceding claim, **characterised in that** it further stores a processing flag (100) which is checked upon each reset or upon each switching-on of the mobile radio apparatus (1).

11. Chip card (10) according to claim 8, **characterised in that** it contains a first set of subscriber identification data from the home radio network, and **in that** it further contains a second set of subscriber information data from a partner radio network administered by an operator having a roaming agreement with the home mobile radio network.

## Revendications

1. Procédé de télécommunications qui permet à un abonné d'un réseau radio de rattachement de se connecter à un réseau radio visité (VPLMN, Visitor Public Land Mobile Network) n'ayant pas passé d'accord de déplacement avec le réseau radio de rattachement, **caractérisé en ce qu'**un programme d'ordinateur remplace les caractéristiques de l'abonné par des caractéristiques qu'a fournies un réseau radio associé, ce dernier ayant passé un accord de déplacement, d'une part, avec le réseau radio de rattachement et, d'autre part, avec le réseau radio visité.

2. Procédé selon la première revendication, **caractérisé en ce que** les factures passent par une unité (6) qui est gérée par le réseau radio associé.

3. Procédé selon l'une des revendications précédentes, **caractérisé en ce qu'**au moins l'un des réseaux radio est un réseau GSM.

4. Procédé selon l'une des revendications précédentes, **caractérisé en ce que** les réseaux radio sont différents.

5. Procédé selon la revendication précédente, **caractérisé en ce que** les caractéristiques de l'abonné sont enregistrées dans un moyen de mémoire (10), par exemple une carte SIM intégrée à l'émetteur-récepteur mobile (1) de l'abonné, et **en ce que** les caractéristiques de l'abonné sont remplacées, en fonction du réseau radio dans lequel l'émetteur-récepteur mobile se trouve à l'instant considéré et en utilisant un moyen (102) de modification de l'identité dans le terminal, par des caractéristiques qui correspondent à un abonné d'un réseau radio associé qui a passé un accord de déplacement, d'une part, avec le réseau radio de rattachement et, d'autre part, avec le réseau radio visité.

6. Procédé selon la revendication précédente, **caractérisé en ce que** les caractéristiques de l'abonné sont remplacées, dans les moyens de mémoire, en utilisant un processeur (102) qui exécute un programme d'ordinateur enregistré dans les moyens de mémoire.

7. Procédé selon la revendication précédente, **caractérisé par** une opération de contrôle d'un indicateur d'exécution (100) qui est contenu dans les moyens de mémoire, à chaque redémarrage ou à chaque mise en marche de l'émetteur-récepteur mobile (1), et en ce que le programme d'ordinateur mentionné est exécuté à la fin du contrôle, quand l'indicateur d'exécution est en place.

8. Carte à puce (10) destinée à être utilisée dans un téléphone mobile (1) et qui permet la mise en mémoire de caractéristiques de l'abonné, **caractérisée en ce qu'**elle est pourvue d'un processeur (102) qui permet de remplacer les caractéristiques de l'abonné, en fonction du réseau radio visité dans lequel se trouve le téléphone mobile au moment considéré, par des caractéristiques qui correspondent à un abonné d'un réseau radio associé ayant passé un accord de déplacement, d'une part, avec le réseau radio de rattachement auquel la personne considérée est abonnée et, d'autre part, avec le réseau radio visité.

9. Carte à puce selon la revendication précédente, **caractérisée en ce que** les moyens servant à changer les caractéristiques de l'abonné comportent un module d'information qui est enregistré dans le dispositif programmé (10) et peut être exécuté par un processeur (102) sur le dispositif programmé.

10. Carte à puce selon la revendication précédente, **caractérisée en ce qu'**elle enregistre en outre un indicateur d'exécution (100) qui est contrôlé à chaque redémarrage ou à chaque mise en marche du téléphone mobile (1).

11. Carte à puce (10) selon la revendication 8, **caractérisé en ce qu'**elle contient un jeu de caractéristiques d'abonné provenant du réseau radio de rattachement et **en ce qu'**elle contient en outre un deuxième jeu de caractéristiques d'abonné provenant d'un réseau radio associé, qui est géré par un exploitant ayant passé un accord de déplacement avec le réseau radio de rattachement.
